# FASCICULE DE BREVET EUROPEEN

(11) **EP 3 999 927 B1**
(45) Date de publication et mention de la délivrance du brevet: **20.09.2023**
(21) Numéro de dépôt: 20757624.0
(22) Date de dépôt: 10.07.2020
(51) Int. Cl.: G05D 1/02, G08G 1/14, E04H 6/42, E04H 6/24, E04H 6/18

(54) **PROCÉDÉ DE GESTION D'UNE FLOTTE DE ROBOTS AUTONOMES DE PARKING PAR UN SUPERVISEUR**
VERFAHREN ZUR VERWALTUNG EINER FLOTTE AUTONOMER PARKROBOTER DURCH EINEN SUPERVISOR
METHOD FOR MANAGING A FLEET OF AUTONOMOUS PARKING ROBOTS BY A SUPERVISOR

(30) Priorité: 15.07.2019 FR 1907969
(43) Date de publication de la demande: 25.05.2022
(73) Titulaire: Stanley Robotics, 75011 Paris (FR)
(72) Inventeur: CORD, Aurélien, 75014 PARIS (FR); BOUSSARD, Clément, 75004 PARIS (FR); PIERRET, Thibaut, 78530 BUC (FR)
(74) Mandataire: IP Trust
(86) Numéro de dépôt international: PCT/FR2020/051249
(87) Numéro de publication internationale: WO 2021/009453

(56) Documents cités:
- CN-A- 109 403 690
- FR-A1- 3 073 769
- US-A1- 2014 365 258
- US-A1- 2018 004 202
- DURRANT-WHYTE H ET AL: "Field and service applications - An autonomous straddle carrier for movement of shipping containers - From Research to Operational Autonomous Systems", IEEE ROBOTICS & AUTOMATION MAGAZINE, IEEE SERVICE CENTER, PISCATAWAY, NJ, US, vol. 14, no. 3, 1 septembre 2007 (2007-09-01), pages 14-23, XP011201725, ISSN: 1070-9932

## Description

La présente invention concerne le domaine des systèmes de parking automatique à haute intensité de stockage qui permet d'optimiser l'exploitation des zones de formes diverses.

Un parking automobile conventionnel classique gaspille beaucoup d'espace. L'espace de stationnement est souvent beaucoup plus grand que celui strictement nécessaire aux véhicules. Ceci facilite les manoeuvres des conducteurs et permet d'ouvrir les portes une fois la voiture garée. Par ailleurs, un parking conventionnel est plus profond et les plafonds sont plus hauts pour permettre aux conducteurs et piétons de s'y déplacer.

C'est pourquoi se développent des solutions de stationnement sans conducteur et des systèmes de parking automatique. Les systèmes de parking automatique limitent la déperdition d'espace propre aux installations de parking conventionnel. Un système mécanique automatique prend en charge le véhicule et le transporte jusqu'à sa place de stationnement, puis au retour quand le conducteur vient récupérer sa voiture, un système automatique de déplacement de voiture la lui restitue. Ainsi, les places prévues pour le stationnement sont beaucoup plus petites et les voies de circulation peuvent être optimisées. De plus, aucun piéton ne se déplace à l'intérieur du parking automatique ce qui permet de renforcer la sécurité de l'utilisation d'équipements autonomes de déplacement des véhicules entre l'aire de réception et la zone de stationnement. Le conducteur dépose et récupère son véhicule dans un sas ouvert et éclairé à l'entrée du parking : il n'a donc pas à parcourir à pied des allées désertes souvent peu accueillantes pour aller à la recherche de sa voiture.

On connaît déjà des installations de parking totalement automatisés dans lesquels des robots soulèvent les véhicules à la position de départ, puis les transportent et les déposent à un endroit de destination. Ces robots de transport peuvent ainsi soulever un véhicule et le transporter automatiquement entre la zone de prise et la zone de dépose. En variante, il existe des robots de transport à châssis transportable constituant la zone de dépose sur laquelle on dépose le véhicule pour que le robot de transport puisse transporter le véhicule sur le châssis jusqu'à la zone de dépose.

Pour permettre l'exploitation opérationnelle de ce type de parking automatique, les équipements autonomes doivent être capables de répondre à la problématique de la détection d'obstacles à partir d'une carte d'obstacles et de capteurs équipant chacun des équipements autonomes.

La fonction de localisation du véhicule est assurée par des solutions techniques qui collaborent pour une robustesse de fonctionnement continu : la localisation odométrique, la localisation par appariement des grilles d'occupation et la localisation par appariement entre une image actuelle et une base d'images adaptée à un besoin spécifique.

La problématique de navigation du véhicule autonome implique le contrôle des actionneurs pour le suivi d'une trajectoire donnée éventuellement le maintien sur une trajectoire admissible pour l'évitement d'obstacles non cartographiés.

Les trajectoires de dépose et de retrait d'un véhicule sont souvent basées sur trois clothoïdes et éventuellement deux arcs de cercle (si le braquage maximal est atteint) permettant de créer des trajectoires à courbure continue.

Ces solutions sont adaptées pour la gestion individuelle de chaque robot de parking, assurant des déplacements programmés. Plus récemment, on a aussi proposé de déployer des flottes de robots travaillant de manière coopérative.

### Etat de la technique

On connaît par exemple le brevet chinois CN109403690A décrivant un système de transfert automatique de véhicule comprend les étapes suivantes :
- l'établissement d'une relation interactive avec un utilisateur ;
- la demande de stationnement de l'utilisateur est obtenue, et un dispositif de chargement et de transport pour charger et transporter un véhicule de l'utilisateur est envoyé vers la position de stationnement de l'utilisateur.
Le dispositif de chargement et de transport charge et transporte automatiquement le véhicule de l'utilisateur à stationner sur une position de stationnement désignée ; la demande de prise en charge de l'utilisateur est obtenue, et le dispositif de chargement et de transport pour charger et transporter le véhicule de l'utilisateur est envoyé à la position de stationnement désignée. Le dispositif charge et transporte automatiquement le véhicule de l'utilisateur à stationner sur une position de ramassage désignée. Le système automatique de transport et de transfert de véhicule comprend le dispositif de chargement et de transport, un système de planification de tâches de dispositif de chargement et de transport multiple, une plateforme matérielle de navigation automatique montée sur véhicule et un système logiciel, un système de station de transfert de véhicule et un homme-machine sous-système d'interaction, dans lequel le dispositif de chargement et de transport est un robot de stationnement.

Un autre brevet de l'art antérieur, US2018004202 décrit un système de demande d'envoi de robots qui fournit une interface utilisateur par l'intermédiaire de laquelle un utilisateur peut envoyer une demande de service pour utiliser au moins une « utilisation de robot en tant que service » (RaaS). Des flottes robotiques peuvent être constituées d'un ensemble de robots homogènes ou d'un ensemble de robots hétérogènes. Une demande de service peut ne pas spécifier une flotte robotique particulière pour effectuer le service demandé. Le système de demande d'envoi de robots peut déterminer une flotte robotique optimale (ou une combinaison optimale de multiples flottes robotiques) pour effectuer le service demandé, puis demander qu'un système de gestion de flotte sélectionne un ou plusieurs robots dans la flotte robotique déterminée pour effectuer le service demandé.

Le brevet FR3073769 a pour objet un robot de parking comprenant une plateforme de transport de hauteur réglable pour transporter un véhicule automobile, une installation de déplacement pour déplacer en hauteur, la plateforme de transport par rapport à la surface de circulation, une installation de commande pour commander l'installation de déplacement pour après le chargement de la plateforme de transport avec le véhicule, déplacer la plateforme de transport par rapport à la surface de circulation, de sa position de chargement dans laquelle le véhicule est chargé sur la plateforme de transport dans une position de transport, dans laquelle le véhicule est transporté, la position de transport étant au-dessus de la position de chargement de façon que la hauteur de la plateforme de transport soit plus haute que la position de chargement par rapport à la surface de circulation.. Une autre solution est décrite dans le brevet US2014365258 un système d'allocation de tâches comprenant une carte définissant un plan de sol, un ensemble d'emplacements de tâches virtuelles et un ensemble d'une ou plusieurs opérations de tâches virtuelles associées à des emplacements de tâches virtuelles. Le système détermine automatiquement les emplacements réels et les opérations de tâches réelles pour les requêtes de tâches, et sélectionne de façon intelligente un robot mobile approprié pour gérer chaque requête de tâche sur la base de l'état actuel et/ou de la configuration actuelle pour le robot mobile sélectionné. Le système envoie également des commandes au robot mobile sélectionné pour amener le robot mobile à commander automatiquement l'emplacement de tâche réel, à effectuer automatiquement les opérations de tâches réelles, ou les deux.

On connaît encore l'enseignement de l'article Durrant-Whyte, Hugh F., Daniel Pagac, Ben Rogers, Michael Stevens and Graeme Nelmes. "Field and service applications - An autonomous straddle carrier for movement of shipping containers - From Research to Operational Autonomous Systems." IEEE Robotics & Automation Magazine 14 (2007): 14-23 décrivant le développement et la mise en oeuvre d'un chariot cavalier autonome (AutoStrad) pour le mouvement des conteneurs d'expédition dans un environnement portuaire. Dans cet article, nous décrivons le véhicule et les fonctions de contrôle, de navigation, de sécurité et de pilotage, qui permettent un fonctionnement autonome. La description de la mise en oeuvre du système complet aborde également les questions de sécurité opérationnelle, de planification et de planification des opérations, les interfaces avec les grues à quai et les véhicules de transport routier.

### Inconvénients de l'art antérieur

Dans les solutions de l'art antérieur, chaque robot reçoit les instructions de déplacement entre le point de chargement du véhicule et le point de dépose et calcule sa trajectoire soit de manière locale et totalement autonome, en fonction des données de géolocalisation et des données environnementales acquises par des capteurs, soit par l'intermédiaire de traitement réalisés par un calculateur d'un serveur communiquant avec le robot.

Cette solution est satisfaisante pour un flux limité de voitures, avec une organisation simple du parking. Il permet de déplacer séquentiellement les voitures arrivant ou partante, avec éventuellement plusieurs robots travaillant en parallèle.

Par contre, ces solutions ne permettent pas de répondre à des flux importants de voitures, par des stratégies d'optimisation des déplacements des robots, travaillant de manière collaborative.

### Solution apportée par l'invention

L'objet de la présente invention est de remédier à ces inconvénients en proposant un procédé de gestion d'une flotte de robots autonomes de parking par un superviseur dont les caractéristiques sont déterminés par la revendication 1.

Chaque robot autonome comporte un calculateur et une mémoire pour l'enregistrement d'une carte numérique de l'espace de parking et des moyens de géolocalisation, des capteurs d'environnement et des moyens de télécommunication avec ledit superviseur

Ledit superviseur comporte un calculateur et une mémoire pour l'enregistrement d'une carte numérique de l'espace de parking ainsi que des moyens de télécommunication avec lesdits robots, un enregistrement d'un identifiant unique de chacun desdits robots, et un calculateur pour calculer les trajectoires desdits robots autonomes

Ledit procédé comporte les étapes suivantes :
- Des étapes intermittentes de calcul par ledit superviseur d'une pluralité d'actions constituées chacune par un message numérique comportant un identifiant d'action, une désignation d'une ou plusieurs tâches et une désignation d'au moins un point de départ ou d'arrivée, associés à un identifiant d'un desdits robots autonomes
- Des étapes intermittentes de calcul, pour chacune desdites actions, d'au moins une tâche constituée de messages numériques comportant une désignation d'une opération, associée à un identifiant d'un desdits robots autonomes
- L'acquisition épisodique par le superviseur de messages numériques transmis par lesdits robots, contenant ledit identifiant unique robot, les données de géolocalisation horodatées dudit robot et le cas échéant l'état d'exécution d'une tâche,
- L'acquisition épisodique par le superviseur de messages numériques provenant d'équipements périphériques,
- Le recalcule périodique d'une série de tâches ou d'actions
- La transmission périodique de messages numériques d'actions
- Le calcul par chacun desdits robots des commandes de ces actionneurs en fonction du message de tâche actif, des informations locales de géolocalisation et de l'état de ses capteurs d'environnement.

Les robots sont ainsi traités non pas comme des éléments totalement indépendants, mais comme une flotte travaillant de manière plus efficace.

Avantageusement, lesdites actions comportent en outre un indicateur de priorité et en ce que le procédé comporte des étapes épisodiques de recalcule de l'ordonnancement des actions et des tâches en fonction desdits indicateurs de priorité.

De préférence, ladite carte numérique de l'espace de parking est découpée en éléments surfaciques, comportant chacun un sémaphore dont l'état SEM(x, y) peut être "libre", "réservé pour le robot i", "occupé par le robot i", "inaccessible".
où x,y désigne le barycentre de l'élément surfacique.

Ledit état "libre" correspond à un un élément accessible par tout robot. Ledit état "réservé pour le robot i" autorise l'accès uniquement au robot i et interdit l'accès et la réservation aux autres robots. Ledit état "occupé par le robot i" signifie que tout ou partie de l'emprise dynamique du robot i empiète sur tout ou partie de l'élément surfacique. L'emprise dynamique s'entend par l'emprise physique du robot augmentée d'une marge de distanciation et projeté dans le sens de mouvement du robot i en fonction de sa vitesse. L'état "occupé" interdit l'accès et la réservation à tous les autres robots. Ledit état "inaccessible" interdit l'accès et/ou la réservation à tous les robots.

Ledit superviseur s'occupe de mettre à jour les états de tous les sémaphores en fonction des données de géolocalisation horodatée de chaque robots. Par exemple, il peut affecter l'état "réservé pour le robot i" à tous les sémaphores SEM(x, y) correspondant à la trajectoire du robot i pour l'exécution de sa tâche.

### Description détaillée d'un exemple non limitatif de l'invention

La présente invention sera mieux comprise à la lecture de la description détaillée d'un exemple non limitatif de l'invention qui suit, se référant aux dessins annexés où :

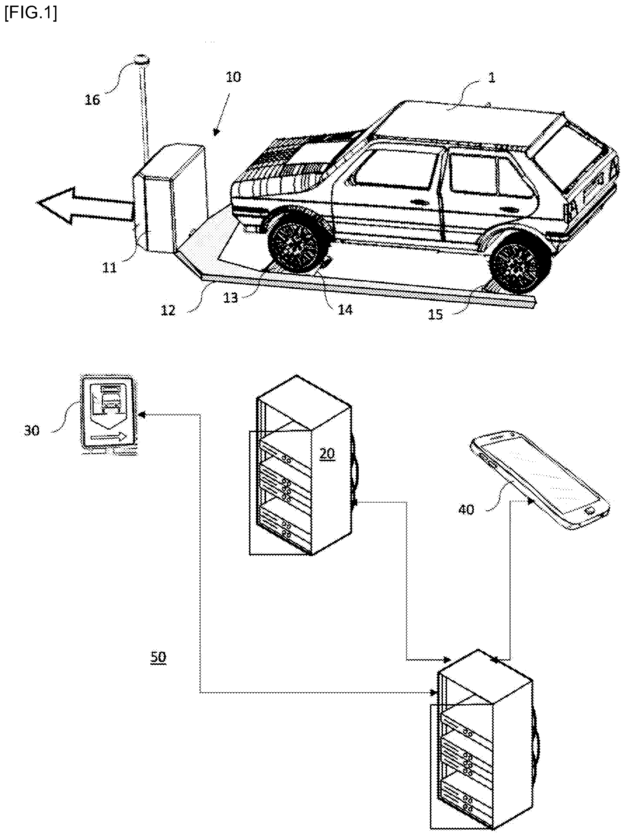

[FIG.1] La figure 1 représente une vue schématique d'un système selon l'invention.

L'invention porte sur la gestion d'une flotte de robots dont les actions sont coordonnées par un superviseur. L'invention porte plus particulièrement sur une dissociation entre :
- Le calcul des stratégies de déplacement et d'optimisation des actions de la flotte de robots, qui est assurée par le superviseur seulement
- L'exécution d'une mission transmise par le superviseur par le robot auquel la mission a été allouée, et qui est transmises par le superviseur sous forme d'un message numérique bref comportant un identifiant d'action, une désignation d'une ou plusieurs tâches et une désignation d'au moins un point de départ ou d'arrivée, associés à un identifiant d'un desdits robots autonomes.
- La transmission par chaque robot de manière épisodiques d'informations permettant au superviseur de réévaluer les missions.

### Description générale du système.

Le système comprend une série de robots voituriers (10) capables de se positionner pour saisir les roues d'une voiture (1) par un système de bras (13, 14, 15) articulés par rapport à une poutre longitudinale (12).

Un exemple d'un tel robot est décrit dans la demande de brevet EP3297876A1. La solution décrite dans ce document diffère toutefois de l'invention par le fait que dans ce brevet, les bras articulés s'étendent depuis un châssis se glissant sous la voiture, vers l'extérieur, alors que dans l'exemple décrit en relation avec la figure 1, deux poutres longitudinales (12) s'étendent de part et d'autre du véhicule, et présentent des bras articulés (13 à 15) s'étendant vers l'intérieur. Cette solution facilite le déplacement de véhicule présentant une très faible garde au sol.

Chaque robot voiturier (10) présente un bloc motorisé (11) associé à des capteurs d'environnement (16) par exemple un lidar ou une caméra multidirectionnelle, ainsi que des capteurs tels que des capteurs odométriques, des capteurs ultrasons pour la détection d'obstacles, des moyens de géolocalisation, etc.

Le robot voiturier (10) comporte par ailleurs un calculateur pour la commande des différents actionneurs (déplacement des bras (13 à 15), relevage des longerons (12), et moteurs pour le déplacement du bloc (11) en fonction des données environnementales provenant des capteurs, et des instructions provenant d'un superviseur (20) communiquant avec la flotte de robots par des messages électroniques.

Chaque robot voiturier (10) est associé à un identifiant numérique unique pour permettre l'identification par les traitements informatiques effectués par le superviseur (20) et l'adressage des messages par le superviseur au robot voiturier (10) concerné par une action.

### Principe général de fonctionnement

Chaque robot voiturier (10) comporte les ressources informatiques pour commander des séquences d'actions en fonction des instructions reçues, par exemple :
- Réceptionner un véhicule (1) : commander les déplacements du bloc (11) du robot (10) pour positionner les longerons (12) le long du véhicule, commander les déplacements des bras (13 à 15)
- Déplacement selon une trajectoire théorique : commander les moteurs du bloc (11) en fonction de la trajectoire d'une part et des informations provenant des capteurs, pour commander un déplacement prenant en compte les obstacles et situations locales.

Le superviseur (20) calcule en permanence les tâches qui doivent être menées par chacun des robots voituriers (10) disponibles sur l'espace de parking, avec une optimisation des actions de la flotte de robots, en fonction des instructions venant d'un gestionnaire du service (50) collectant les informations numériques venant d'équipements périphériques tels que :
- Une borne d'accueil (30) située dans la zone de réception des véhicules
- Un téléphone intelligent (40) envoyant par exemple un message d'un propriétaire pour récupérer son véhicule.
- Des messages provenant d'une interface de supervision dédiée

Le gestionnaire du service (50) calcule les déplacements à réaliser des véhicules stockés ou à stocker et les transmet au superviseur (20 sous forme d'actions pour les robots voituriers (10). Le superviseur convertit ces actions sous forme de tâches et les transmet aux robots voituriers (10) de façon à optimiser la disponibilité des robots voituriers (10) pour charger le ou les véhicules arrivant dans la zone de réception, le chargement des véhicules à déplacer vers la zone de récupération, et également les déplacements des véhicules dans la zone de stationnement, pour réorganiser la position des voitures pour densifier le stockage et repositionner les véhicules de façon à faciliter leur accès à l'approche de la date de restitution. Ces informations sont transmises au superviseur (20) qui distribue les tâches aux robots voituriers (10) et vérifie leur acquittement, et le cas échéant dialogue avec le gestionnaire du service (50) pour notifier les indisponibilités et commander le calcul de nouvelles séries d'actions.

Le superviseur (20) et le gestionnaire du service (50) peuvent être réunis en un seul équipement informatique. Alternativement, un gestionnaire du service (50) peut être commun à plusieurs superviseurs (20) commandant chacun un espace de parking dédié.

### Protocole de communication

Le protocole de communication permet de pouvoir répartir les ordres de déplacement de véhicules sur plusieurs robots, ainsi que de gérer une flotte de robots. Ce protocole est basé sur un service de communication (API) pour ajouter ou consulter l'état des tâches, assurer la communication avec l'ensemble des robots présents sur le parking, et communiquer avec le reste du service, notamment le système d'ordonnancement du parking (50).

Le superviseur (20) gère la flotte de robots voituriers (10) et calcule des commandent numériques de deux types :
- Action : Une Action représente une consigne haut niveau à destination d'un robot. Il possède un numéro d'identification unique (UUID) permettant les échanges entre les différents acteurs. Ex. "Déplacer la voiture sur la place A vers la place B", "Va à la place C"
- Tâche : une tâche représente une consigne élémentaire robot. Une action se décompose généralement en plusieurs tâches.

Quelques exemples de tâche :
- Charge : tâche commandant au robot de procéder au chargement d'un véhicule. Les attributs de cette tâche sont par exemple les coordonnées du véhicule à charger.
- Déplace chargé : tâche commandant au robot de procéder à un déplacement avec un véhicule chargé sur son plateau. Les attributs de cette tâche sont par exemple les coordonnées du point de départ (implicitement la position actuelle du robot) et les coordonnées de la fin de la trajectoire de déplacement, ou la succession de segments de déplacement
- Décharge : tâche commandant au robot de procéder au déchargement d'un véhicule puis à son déplacement. Les attributs de cette tâche sont par exemple les coordonnées du point de déchargement (implicitement les coordonnées actuelles du robot) et les coordonnées de la fin de la trajectoire de déplacement, ou la succession de segments de déplacement.
- Déplace déchargé : tâche commandant au robot de procéder à un déplacement sans véhicule. Les attributs de cette tâche sont par exemple les coordonnées du point de départ (implicitement la position actuelle du robot) et les coordonnées de la fin de la trajectoire de déplacement, ou la succession de segments de déplacement
- Va à l'emplacement de recharge batterie : tâche commandant au robot de se déplacer vers la zone de recharge batterie. Les attributs de cette tâche sont par exemple les coordonnées du point de départ (implicitement les coordonnées actuelles du robot) et les coordonnées de la fin de la trajectoire de déplacement (emplacement du point de recharge), ou la succession de segments de déplacement.

Le gestionnaire du système (50) dispose d'une grammaire d'appels disponibles pour échanger sur les actions avec le superviseur (20) comprenant :
[POST]
   - envoi de l'action
[GET]
   - /actions : liste de toutes les Actions disponibles
   - / actions /current : retourne les Actions en cours
   - / actions /{UUID} : retourne une Action par identifiant UUID
[PUT]
   - / actions /[UUID]/Cancel : annule l'Action (si celle-ci n'a pas commencé)
   - modification de la priorité de l'Action

### Statuts des tâches et du gestionnaire de flotte de robots voituriers (10)

Le superviseur (20) va découper les actions transmises par le gestionnaire du système (50) en tâches à destination des robots.

Le superviseur (20) va gérer la disponibilité des robots en fonction des informations transmises par le gestionnaire du système (50).

Si aucun robot (10) n'est disponible, les tâches sont conservées par le superviseur (20) jusqu'à ce qu'un robot (10) soit disponible pour recevoir une tâche. Au-delà d'un délai déterminé, le superviseur (20) transmet l'information au gestionnaire du système (50) qui recalcule de nouvelles options.

Un robot voiturier (10) est configuré pour ne traiter qu'une seule tâche à la fois. Il peut cependant recevoir une liste de tâches à exécuter successivement.

Les statuts d'une tâche pour le robot voiturier sont :
- à exécuter
- en cours d'exécution
- exécuté
- abandonné

Le superviseur (20) récupère l'état de la tâche en cours auprès de chaque robot voiturier (10) de la flotte, évalue le statut de l'action correspondante et le transmet au gestionnaire du système (50).

Les statuts d'une action pour le gestionnaire du système (50) et/ou le superviseur (20) qu'il peut communiquer au reste du service sont :
- Attente d'un robot disponible
- Alloué à un robot voiturier désigné par son identifiant (qui remplacera le statut "à exécuter")
- Requête d'intervention humaine
- Abandonnée
- Annulée

Le superviseur (20) évalue le statut de l'action en fonction des statuts des tâches correspondantes.

### Gestion de la priorité des Actions

Le gestionnaire du système (50) fixe une priorité pour chaque action entre 0 et 1000 (1000 étant le plus prioritaire).

Tant qu'une action n'est pas commencée, le gestionnaire (50) garde la possibilité de modifier la priorité (en général pour l'augmenter).

Le superviseur (20) garantit que les tâches les plus prioritaires sont exécutées en premier.

### Actions chaînées

Certaines actions (parent) doivent être réalisées avant une autre (fille), par exemple si une voiture doit être déplacée pour qu'une autre soit accessible.

Le parent devra être exécuté avant la fille. Le superviseur (20) doit gérer l'ordre d'exécution des actions pour garantir cette contrainte. Des actions chaînées peuvent être réalisées par un ou plusieurs robots.

Dans ce contexte, le superviseur (20) peut envoyer plusieurs robots simultanément pour répartir entre eux les tâches pour la bonne réalisation de l'action.

### Intégration avec la base de données géographiques

Le gestionnaire du service (50) construit chaque action en récupérant auprès d'un service extérieur les identifiants des places stockant chaque véhicule. Lors de la réception d'une action, le superviseur (20) récupère les coordonnées des places auprès du même service à partir de l'identifiant.

### Fonctionnalités Multi-robots

Afin de gérer plusieurs robots voituriers (10) évoluant en simultané sur la zone de stockage, celle-ci a été découpée en éléments surfaciques disjoints, comportant chacun un sémaphore dont l'état SEM(x, y) peut être "libre", "réservé pour le robot i", "occupé par le robot i", "inaccessible".

Ledit état "libre" correspond à un un élément accessible par tout robot. Ledit état "réservé pour le robot i" autorise l'accès uniquement au robot i et interdit l'accès et la réservation aux autres robots. Ledit état "occupé par le robot i" signifie que tout ou partie de l'emprise dynamique du robot i empiète sur tout ou partie de l'élément surfacique. L'emprise dynamique s'entend par l'emprise physique du robot augmentée d'une marge de distanciation et projeté dans le sens de mouvement du robot i en fonction de sa vitesse. L'état "occupé" interdit l'accès et la réservation à tous les autres robots. Ledit état "inaccessible" interdit l'accès et/ou la réservation à tous les robots.

Ledit superviseur s'occupe de mettre à jour les états de tous les sémaphores en fonction des données de géolocalisation horodatée de chaque robots. Ainsi, pour chaque robot, le superviseur (20) réserve l'espace nécessaire à la réalisation de sa tâche ou de ses manoeuvres.

Lors du déplacement d'un robot, le superviseur (20) vérifie que chaque élément surfacique à emprunter prochainement par le robot est "libre" ou "réservé pour le robot i" et modifie son état, si nécessaire, pour que le robot réalise son action.

En cas de tâche passant par un élément surfacique non autorisé :
- soit le superviseur (20) est capable de contourner l'élément surfacique pour proposer un autre chemin pour la réalisation de la tâche,
- soit la tâche sera mise en attente par le superviseur (20) jusqu'à ce que la tâche en cours soit terminée ou que les éléments surfaciques soient libérés.
- soit le robot avance jusqu'à l'entrée de la l'élément surfacique non autorisé et attend la libération de celui-ci.

La suppression/annulation d'une action sur le superviseur (20) entraîne la libération des éléments surfaciques concernés.

Une fois que le robot a dépassé un élément surfacique, celui-ci est remis dans l'état libre afin qu'un autre robot puisse accéder à cet élément.

Si une tâche est abandonnée (aborted) par un robot, le superviseur (20) va chercher un autre robot disponible pour réaliser cette tâche et finaliser l'action associée.

## Revendications

1. -Procédé de gestion d'une flotte de robots autonomes de parking comportant une pluralité de robots autonomes, commandés par un superviseur (20) et par un gestionnaire du service (50),
- Chaque robot autonome (10) comportant un calculateur et une mémoire pour l'enregistrement d'une carte numérique de l'espace de parking et des moyens de géolocalisation, des capteurs d'environnement et des moyens de télécommunication avec ledit superviseur (20)
- Ledit superviseur comportant un calculateur pour calculer les trajectoires desdits robots autonomes et une mémoire pour l'enregistrement d'une carte numérique de l'espace de parking ainsi que des moyens de télécommunication avec lesdits robots, un enregistrement d'un identifiant unique de chacun desdits robots,
**caractérisé en ce que**
- Ledit gestionnaire du service (50) calcule les déplacements à réaliser des véhicules stockés ou à stocker et les transmet au superviseur (20) sous forme d'actions pour les robots voituriers (10) ;
- ledit superviseur (20) convertit ces actions sous forme de tâches et les transmet aux robots voituriers (10) de façon à optimiser la disponibilité des robots voituriers (10) pour charger le ou les véhicules arrivant dans la zone de réception, le chargement des véhicules à déplacer vers la zone de récupération, et également les déplacements des véhicules dans la zone de stationnement, pour réorganiser la position des voitures pour densifier le stockage et repositionner les véhicules de façon à faciliter leur accès à l'approche de la date de restitution.
- ledit superviseur (20) distribue les tâches aux robots voituriers (10) et vérifie leur acquittement, et le cas échéant dialogue avec le gestionnaire du service (50) pour notifier les indisponibilités et commander le calcul de nouvelles séries d'actions ;
Ledit procédé comportant en outer les étapes suivantes :
- Des étapes intermittentes de calcul par ledit superviseur d'une pluralité d'actions constituées chacune par un message numérique comportant un identifiant d'action, une désignation d'une ou plusieurs tâches et une désignation d'au moins un point de départ ou d'arrivée, associés à un identifiant d'un desdits robots autonomes
- Des étapes intermittentes de calcul, pour chacune desdites actions, d'au moins une tâche constituée de messages numériques comportant une désignation d'une action, associée à un identifiant d'un desdits robots autonomes
- L'acquisition épisodique par le superviseur de messages numériques transmis par lesdits robots, contenant ledit identifiant unique robot, les données de géolocalisation horodatées dudit robot et le cas échéant l'état d'exécution d'une tâche,
- L'acquisition épisodique par le superviseur de messages numériques provenant d'équipements périphériques comportant :
∘ Une borne d'accueil (30) située dans la zone de réception des véhicules ou
∘ Un téléphone intelligent (40) envoyant par exemple un message d'un propriétaire pour récupérer son véhicule
∘ Une interface de supervision dédiée délivrant des messages
- Le recalcule périodique d'une série de tâches ou d'actions
- La transmission périodique de messages numériques d'actions
- Le calcul par chacun desdits robots des commandes de ces actionneurs en fonction du message de tâche actif, des informations locales de géolocalisation et de l'état de ses capteurs d'environnement.

2. Procédé de gestion d'une flotte de robots autonomes de parking par un superviseur, selon la revendication 1 **caractérisée en ce que** lesdites actions comportent en outre un indicateur de priorité et **en ce que** le procédé comporte des étapes épisodiques de recalcule de l'ordonnancement des actions et des tâches en fonction desdits indicateurs de priorité.

3. Procédé de gestion d'une flotte de robots autonomes de parking par un superviseur, selon la revendication 1 **caractérisée en ce que** ladite carte numérique de l'espace de parking est découpée en éléments surfaciques, comportant chacun un sémaphore dont l'état SEM(x, y)i détermine l'accessibilité par le robot ROBi et **en ce que** ledit superviseur affecte à tous les sémaphores SEM(x, y) correspondant à la trajectoire du robot ROBi pour l'exécution d'une tâche un état actif pour le robot ROBi et un état non actif pour tous les autres robots.

4. Procédé de gestion d'une flotte de robots autonomes de parking par un superviseur, selon la revendication 1 **caractérisée en ce que** ladite carte numérique de l'espace de parking est découpée en éléments surfaciques, comportant chacun un sémaphore dont l'état SEM(x, y)i détermine l'accessibilité par le robot ROBi et **en ce que** ledit superviseur affecte aux sémaphores SEM(x, y) correspondant aux positions actuelles, futures et/ou passées sur une durée donnéedu robot ROBi pour l'exécution d'une tâche ou d'une manoeuvre un état actif pour le robot ROBi et un état non actif pour tous les autres robots.

5. Procédé de gestion d'une flotte de robots autonomes de parking par un superviseur, selon la revendication 1 **caractérisée en ce que** ledit superviseur décide automatiquement d'affecter à une tâche le robot ROBi le plus indiqué pour l'exécution de ladite tâche en tenant compte d'un ou plusieurs critères tels que la distance à parcourir, l'état de charge des robots, le taux d'usage de chaque robot ou la priorité de ladite tâche.

## Patentansprüche

1. Verfahren zum Verwalten einer Flotte von selbstständigen Parkrobotern, die eine Vielzahl von selbstständigen Robotern umfasst, die durch ein Organisationsprogramm (20) und durch einen Dienstbetreiber (50) gesteuert werden,
- wobei jeder selbstständige Roboter (10) einen Rechner und einen Speicher zum Registrieren einer digitalen Karte des Parkplatzes und von Ortungsmitteln, Umgebungssensoren und Mittel zum Telekommunizieren mit dem Organisationsprogramm (20) umfasst
- dieses Organisationsprogramm einen Rechner zum Berechnen der Trajektorien der selbstständigen Roboter und einen Speicher zum Speichern einer digitalen Karte des Parkplatzes sowie Mittel zum Telekommunizieren mit den Robotern, ein Speichern einer eindeutigen Kennung jedes der Roboter umfasst,
**dadurch gekennzeichnet, dass:**
- der Dienstbetreiber (50) die Bewegungen bei der Abwicklung gelagerter oder zu lagernder Fahrzeuge berechnet und diese an das Organisationsprogramm (20) in Form von Aktionen für die Fahrerroboter (10) überträgt;
- das Organisationsprogramm (20) diese Aktionen in Aufgabenform umwandelt und an die Fahrerrobotor (10) überträgt, um die Verfügbarkeit der Fahrerrobotor (10) zum Aufladen des einen oder der mehreren in den Aufnahmebereich eintretenden Fahrzeuge, das Aufladen der in den Wiedererlangungsbereich zu bewegenden Fahrzeuge und auch die Bewegungen von Fahrzeugen in dem Stationierungsbereich zu optimieren, um die Position der Fahrzeuge neu zu organisieren, um die Lagerung zu verdichten und die Fahrzeuge neu zu positionieren, um den Zugang, wenn das Datum der Rückgabe naht, zu ermöglichen.
- das Organisationsprogramm (20) die Aufgaben an die Fahrerroboter (10) verteilt und ihre Erfüllung überprüft, und gegebenenfalls mit dem Dienstbetreiber (50) kommuniziert, um die Nichtverfügbarkeiten zu melden und die Berechnung neuer Reihen von Aktionen zu steuern;
wobei das Verfahren ferner die folgenden Schritte umfasst:
- intermittierende Schritte des Berechnens, durch das Organisationsprogramm, einer Vielzahl von Aktionen, die jeweils aus einer digitalen Nachricht bestehen, die eine Aktionskennung, eine Bezeichnung einer oder mehrerer Aufgaben und eine Bezeichnung mindestens eines Start- oder Endpunkts, der mit einer Kennung eines der selbstständigen Roboter verbunden ist, umfasst
- intermittierende Schritte des Berechnens, für jede der Aktionen, mindestens einer Aufgabe, die aus digitalen Nachrichten besteht, die eine Bezeichnung einer Aktion umfassen, die mit einer Kennung eines der selbstständigen Roboter verbunden ist
- episodisches Erfassen, durch das Organisationsprogramm, von digitalen Nachrichten, die durch die Roboter übertragen werden, die die eindeutige Roboterkennung, die zeitgestempelten Ortungsdaten des Roboters und gegebenenfalls den Ausführungsstatus einer Aufgabe enthalten,
- episodisches Erfassen, durch das Organisationsprogramm, von digitalen Nachrichten von Peripherievorrichtungen, umfassend:
o eine Aufnahmeklemme (30), die sich in dem Fahrzeugempfangsbereich befindet oder
o ein Smartphone (40), das zum Beispiel eine Nachricht von einem Inhaber sendet, um sein Fahrzeug wiederzuerlangen
o eine dedizierte Überwachungsschnittstelle, die Nachrichten ausstellt
- periodisches Neuberechnen einer Reihe von Aufgaben oder Aktionen
- periodisches Übertragen digitaler Aktionsnachrichten
- Berechnen, durch jeden der Roboter, von Befehlen dieser Aktoren basierend auf der aktiven Aufgabennachricht, lokalen Ortungsinformationen und dem Zustand seiner Umgebungssensoren.

2. Verfahren zum Verwalten einer Flotte von selbstständigen Parkrobotern durch ein Organisationsprogramm nach Anspruch 1,
**dadurch gekennzeichnet, dass** die Aktionen ferner einen Prioritätsindikator umfassen, **und dadurch, dass** das Verfahren episodische Schritte des Neuberechnens der Anordnung der Aktionen und Aufgaben in Abhängigkeit von den Prioritätsindikatoren umfasst.

3. Verfahren zum Verwalten einer Flotte von selbstständigen Parkrobotern durch ein Organisationsprogramm nach Anspruch 1,
**dadurch gekennzeichnet, dass** die digitale Karte des Parkplatzes in Oberflächenelemente aufgeteilt ist, die jeweils einen Semaphor umfassen, dessen SEM-Zustand (x, y)i die Zugänglichkeit durch den Roboter ROBi bestimmt,
**und dadurch, dass** das Organisationsprogramm alle Semaphoren SEM(x, y), die der Trajektorie des Roboters ROBi entsprechen, dazu bestimmt, eine Aufgabe in einem aktiven Zustand für den Roboter ROBi und einem nicht aktiven Zustand für alle anderen Roboter auszuführen.

4. Verfahren zum Verwalten einer Flotte von selbstständigen Parkrobotern durch ein Organisationsprogramm nach Anspruch 1,
**dadurch gekennzeichnet, dass** die digitale Karte des Parkplatzes in Oberflächenelemente aufgeteilt ist, die jeweils einen Semaphor umfassen, dessen SEM-Zustand (x, y)i die Zugänglichkeit durch den Roboter ROBi bestimmt,
**und dadurch, dass** das Organisationsprogramm Semaphoren SEM(x, y), die aktuellen, zukünftigen und/oder vergangenen Positionen entsprechen, über eine gegebene Dauer des Roboters ROBi, dazu bestimmt, eine Aufgabe oder ein Manöver in einem aktiven Zustand für den Roboter ROBi und einem nicht aktiven Zustand für alle anderen Roboter auszuführen.

5. Verfahren zum Verwalten einer Flotte von selbstständigen Parkrobotern durch ein Organisationsprogramm nach Anspruch 1,
**dadurch gekennzeichnet, dass** das Organisationsprogramm automatisch entscheidet, den Roboter ROBi, der am meisten für die Ausführung der Aufgabe angezeigt ist, für eine Aufgabe zu bestimmen, unter Berücksichtigung eines oder mehrerer Kriterien wie den zurückzulegenden Abstand, den Ladezustand des Roboters, die Nutzungsrate jedes Roboters oder die Aufgabenpriorität.

## Claims

1. Method for managing a fleet of autonomous parking robots comprising a plurality of autonomous robots, which robots are controlled by a supervisor (20) and by a service manager (50),
- each autonomous robot (10) comprising a computer and a memory for storing a digital map of the parking space and geolocation means, environment sensors and means for telecommunication with said supervisor (20)
- said supervisor comprising a computer for calculating the trajectories of said autonomous robots and a memory for storing a digital map of the parking space, as well as means for telecommunication with said robots, and a record of a unique identifier of each of said robots,
**characterized in that**
- said service manager (50) calculates the movements to be carried out of the vehicles stored or to be stored and transmits said movements to the supervisor (20) in the form of actions for the valet robots (10);
- said supervisor (20) converts these actions into tasks and transmits them to the valet robots (10) so as to optimize the availability of the valet robots (10) to load the vehicle(s) arriving in the reception area, the loading of vehicles to be moved to the recovery area, and also the movement of vehicles in the parking area, in order to reorganize the position of the cars to density storage and to reposition the vehicles so that they are easier to access as the return date approaches;
- said supervisor (20) distributes the tasks to the valet robots (10) and verifies their acknowledgment, and if necessary communicates with the service manager (50) to report any unavailability and order the calculation of new series of actions;
said method further comprises the following steps:
- intermittent steps of calculating, by means of said supervisor, a plurality of actions each consisting of a digital message comprising an action identifier, a designation of one or more tasks and a designation of at least one starting or ending point, associated with an identifier of one of said autonomous robots
- intermittent steps of calculating, for each of said actions, at least one task consisting of digital messages comprising a designation of an action, associated with an identifier of one of said autonomous robots
- episodic acquisition, by the supervisor, of digital messages transmitted by said robots, containing said unique robot identifier, the time-stamped geolocation data of said robot and, if applicable, the execution status of a task,
- episodic acquisition, by the supervisor, of digital messages from peripheral equipment comprising:
∘ a receiving terminal (30) located in the vehicle reception area or
∘ a smartphone (40) for example sending a message from an owner to retrieve their vehicle
∘ a dedicated supervision interface delivering messages
- periodic recalculation of a series of tasks or actions
- periodic transmission of digital action messages
- calculation, by each of said robots, of the commands for these actuators based on the active task message, local geolocation information and the status of its environment sensors.

2. Method for managing a fleet of autonomous parking robots by means of a supervisor according to claim 1, **characterized in that** said actions further comprise a priority indicator **and in that** the method comprises episodic steps of recalculating the scheduling of actions and tasks based on said priority indicators.

3. Method for managing a fleet of autonomous parking robots by means of a supervisor according to claim 1, **characterized in that** said digital map of the parking space is divided into surface elements, each comprising a semaphore of which the status SEM(x, y)i determines the accessibility by the robot ROBi **and in that** said supervisor assigns, to all the semaphores SEM(x, y) corresponding to the trajectory of the robot ROBi for the execution of a task, an active status for the robot ROBi and a non-active status for all other robots.

4. Method for managing a fleet of autonomous parking robots by means of a supervisor according to claim 1, **characterized in that** said digital map of the parking space is divided into surface elements, each comprising a semaphore of which the status SEM(x, y)i determines the accessibility by the robot ROBi **and in that** said supervisor assigns, to the semaphores SEM(x, y) corresponding to the current, future and/or past positions over a given duration of the robot ROBi for the execution of a task or a maneuver, an active status for the robot ROBi and a non-active status for all other robots.

5. Method for managing a fleet of autonomous parking robots by means of a supervisor according to claim 1, **characterized in that** said supervisor automatically decides to assign the robot ROBi most suitable for the execution of a task to said task, taking into account one or more criteria such as the distance to be covered, the state of charge of the robots, the rate of use of each robot or the priority of said task.
